## Europäisches Patentamt
## European Patent Office
## Office européen des brevets

(19)

(11) Veröffentlichungsnummer: **0 166 962**
**B1**

(12) **EUROPÄISCHE PATENTSCHRIFT**

(45) Veröffentlichungstag der Patentschrift:
**13.07.88**

(21) Anmeldenummer: **85106549.0**

(22) Anmeldetag: **29.05.85**

(51) Int. Cl.⁴: **C 08 G 63/20,** C 08 G 18/42,
C 09 D 3/72

(54) **Neue Polyesterpolyole und ihre Verwendung als Polyol-Komponente in Zweikomponenten-Polyurethanlacken.**

(30) Priorität: **07.06.84 DE 3421122**

(43) Veröffentlichungstag der Anmeldung:
**08.01.86 Patentblatt 86/2**

(45) Bekanntmachung des Hinweises auf die Patenterteilung:
**13.07.88 Patentblatt 88/28**

(84) Benannte Vertragsstaaten:
**BE DE FR GB**

(56) Entgegenhaltungen:
**EP - A - 0 005 033**
**EP - A - 0 024 379**
**FR - A - 2 230 701**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Pedain, Josef, Dr., Haferkamp 6, D-5000 Köln 80 (DE)**
Erfinder: **König, Klaus, Dr., Heymannstrasse 50, D-5090 Leverkusen 1 (DE)**
Erfinder: **Schönfelder, Manfred, Dr., Höhenstrasse 126, D-5090 Leverkusen 3 (DE)**

ACTORUM AG

## Beschreibung

Die vorliegende Erfindung betrifft neue Polyesterpolyole auf Basis ausgewählter Ausgangsmaterialien und ihre Verwendung in Kombination mit bestimmten Lackpolyisocyanaten als Bindemittel bzw. Bindemittelkomponente in Zweikomponenten-Polyurethanlacken bei der Beschichtung von Kunststofformteilen.

Es ist seit langem bekannt, wenig flexible Substrate, wie z.B. Metall oder Holz mit Zweikomponenten-Polyurethanlacken auf Basis von Hydroxylgruppen aufweisenden Polyestern, Polyethern oder Polyacrylaten und organischen Polyisocyanaten zu beschichten. Die resultierenden Lacküberzüge zeichnen sich insbesondere durch eine ausgezeichnete Härte, eine sehr gute Haftung und unübertroffene Wetterbeständigkeit aus. Die chemischen Grundlagen dieser Lacke und Überzüge werden u.a. in «Lackkunstharze» Hans Wagner/Hans Friederich Sarx, Carl Hanser Verlag, München, Seite 153 bis 173, 1971, beschrieben.

Die Zweikomponenten-Polyurethanlacke des Standes der Technik führen jedoch oft zu hochvernetzten Lacküberzügen, deren Elastizität den diesbezüglichen Anforderungen an Überzüge für flexible Substrate oft nicht genügt. Besonders im Automobilbau werden in zunehmendem Umfang flexible Kunststoffteile zur Erhöhung der Sicherheit eingesetzt. So müssen z.B. in einigen Ländern Kraftfahrzeuge mit Stossstangen ausgerüstet sein, die einen Aufprall mit einer bestimmten Geschwindigkeit (z.B. 5 MPH) gegen eine feste Barriere ohne Beschädigung überstehen, wobei gleichzeitig Funktionsteile wie Scheinwerfer, Blinkleuchten, Türen und Hauben in ihrer Funktion nicht beeinträchtigt werden dürfen. Diese und andere, noch weiter gehende Forderungen haben in vielen Ländern dazu geführt, dass die bisherigen Stossfänger aus Metall beim PKW-Bau nicht mehr verwendet werden und komplette Vorder- und Heckteile aus hochflexiblen Materialien hergestellt werden, die die Forderung nach schadfreier Rückstellbarkeit des Stossfängers nach dem Aufprall erfüllen (Vermeidung von Schäden bei Bagatellunfällen).

Als hochflexible Kunststoffe für diese Anwendung haben sich u.a. halbharte, elastomere Polyurethane (z.B. ®Bayflex-Typen der BAYER AG, Leverkusen), die aus Zweikomponenten-Polyurethanbildnergemischen nach der Reaktionsspritzgusstechnik in geschlossenen Formen, gegebenenfalls unter Aufschäumung hergestellt werden, thermoplastische Polyurethane (z.B. ®Desmopan-Typen der BAYER AG oder ®Texin-Typen der Mobay Chemical Corporation, Pittsburgh, USA), die nach der Spritzgusstechnik verarbeitet werden, als auch die unterschiedlichsten Kautschuktypen als geeignet erwiesen.

Im Fahrzeugbau seit einigen Jahren zum Stand der Technik gehörende Kunststoffteile auf Basis dieser Chemiewerkstoffe sind relativ gross und bestimmen deshalb wesentlich das Aussehen des Fahrzeugs. Aus diesen Gründen ist eine Lackierung der rohen Teile erforderlich. Es kommt hinzu, dass die Oberfläche der Kunststoffe bei Bewitterung abgebaut werden und daher gegen Witterungseinflüsse geschützt werden müssen. Elastische Lackierungen sind jedoch auch für weniger elastische Kunststoffteile erforderlich, um mechanische Schädigung der Teile zu verhindern. So müssen beispielsweise harte, aber zähe Thermoplaste mit hochelastischen, äusserst beständigen Lacken lackiert werden, um zu verhindern, dass der Lackfilm bei mechanischer Beschädigung oder durch andere äussere Einflüsse reisst und die Risse sich in dem kompakten Kunststoff fortsetzen. An die Lackierung – vor allem an die Decklakkierung – solcher Teile werden daher weit über das Mass einer üblichen Lackierung hinausgehende Ansprüche gestellt.

Es war daher die der Erfindung zugrundeliegende Aufgabe, ein neues Zweikomponenten-Polyurethanlack-System zur Verfügung zu stellen, das diesen besonderen Anforderungen genügt und insbesondere für die Lackierung von elastischen Kunststoffteilen optimal geeignet ist. Das neue Lacksystem sollte insbesondere folgenden Anforderungen genügen:

1. Tieftemperatur-Elastizität:

Auch bei −25 °C darf der Film bei den genannten Aufprallgeschwindigkeiten nicht reissen. Die mechanischen Eigenschaften des Kunststoffs sollen durch die Lackierung möglichst wenig beeinträchtigt werden.

2. Gute Glanzhaltung:

Der Lackfilm auf den Kunststoffteilen sollte möglichst haltbar sein. Er darf unter Witterungseinflüssen nicht schneller abbauen als derjenige auf der Karosserie.

3. Keine Nachversprödung bei Bewitterung:

Auch nach längerer Bewitterung darf der Film nicht nachverspröden, d.h., die Tieftemperaturelastizität soll sich während der Bewitterung nicht verschlechtern.

4. Niedrige Trockentemperatur:

Die Wärmestandfestigkeit solcher grosser Kunststoffteile ist begrenzt. Die erforderlichen Trockentemperaturen und -zeiten sollten daher aus diesen, aber auch aus Gründen der Energieersparnis möglichst niedrig sein.

5. Reparaturfähigkeit:

Die Trocknungsbedingungen eines solchen Systems sollten neben der Erstlackierung auch eine Reparaturlackierung bei 80 °C oder Raumtemperatur ermöglichen.

Es gelingt zwar auch unter Verwendung der bekannten Zweikomponenten-Systeme des Standes der Technik hochflexible Lacke herzustellen, die in Bezug auf Elastizität und Kälteflexibilität vollkommen ausreichend sind. Vor allem ist dies durch Verwendung von bestimmten Polyhydroxylpolyestern als wesentliche Polyolkomponente möglich, die vorwiegend aus aliphatischen Dicarbonsäuren und aliphatischen Diolen aufgebaut sind und allenfalls eine unwesentlich oberhalb 2 liegende Hydroxylfunktionalität aufweisen. Der Nachteil von Zweikomponenten-Polyurethanlakken auf Basis derartiger Polyesterdiole und der üblichen Lackpolyisocyanate besteht jedoch in dem Umstand, dass die Lacküberzüge viel zu weich, d.h. von zu geringer Oberflächenhärte sind. Vor allem sind die Wetterresistenz, die Kreidungsbeständigkeit und damit die Glanzhaltung der aus derartigen Lacksystemen aufgebauten Überzüge völlig unzureichend.

Auch die in der Patentliteratur (z.B. DE-A-2 407 495) beschriebenen sogenannten Einpacküberzugsmassen, die u.a. ein urethanisiertes Polyesterpolyol und als vernetzende Komponente z.B. ein Melamin-Formaldehyd-Harz enthalten und sich besonders zum Überziehen von kautschukartigen, federnden Substraten eignen (wie Schaumstoffen aus Polyurethanen und natürlichen und synthetischem Kautschuk), sind zum Lackieren von Automobilteilen, für die die obengenannten Anforderungen gelten, nicht optimal geeignet. Von Nachteil ist insbesondere, dass die Aushärtung der Lacke bei erhöhten Temperaturen erfolgen muss, was dazu führt, dass die Kunststofformteile, die oft nur eine geringe Wärmefestigkeit aufweisen, während des Einbrennens der Lacke verformen.

Wie jetzt überraschenderweise gefunden wurde, gelingt es durch die Verwendung der nachstehend näher beschriebenen erfindungsgemässen Polyesterpolyole auf Basis ausgewählter Ausgangsmaterialien als Polyhydroxylkomponente bzw. wesentlichen Teil der Polyhydroxylkomponente in Zweikomponenten-Polyurethanlacken die gestellte Aufgabe zu lösen.

Gegenstand der Erfindung sind Polyesterpolyole des Hydroxylzahlbereichs von 80 bis 250, die Umsetzungsprodukte von

a) 54 bis 58 Mol-% einer Polyol-Komponente mit

b) 46 bis 42 Mol-% einer Dicarbonsäure-Komponente darstellen, dadurch gekennzeichnet, dass

a) die Polyolkomponente aus (i) 70 bis 90 Mol-% Hexandiol-1,6 und (ii) 10 bis 30 Mol-% mindestens eines höherwertigen Alkohols, ausgewählt aus der Gruppe bestehend aus Trimethylolpropan, Glycerin, Pentaerythrit und Gemischen dieser Polyole, besteht, und

b) die Dicarbonsäurekomponente aus (iii) 50 bis 80 Mol-% Isophthalsäure, (iv) 30 bis 20 Mol-% mindestens einer Dicarbonsäure der Formel $HOOC-(CH_2)_n-COOH$ (n = eine ganze Zahl von 2–8) und (v) 0 bis 20 Mol-% mindestens einer Dicarbonsäure oder mindestens eines Dicarbonsäureanhydrids, ausgewählt aus der Gruppe bestehend aus Terephthalsäure, Phthalsäure, Phthalsäureanhydrid, Tetrahydrophthalsäure, Tetrahydrophthalsäureanhydrid, Hexahydrophthalsäure und Hexahydrophthalsäureanhydrid, besteht,

wobei sich die unter a) und b) gemachten Prozentangaben jeweils zu 100 ergänzen.

Gegenstand der Erfindung ist auch die Verwendung dieser erfindungsgemässen Polyesterpolyole, gegebenenfalls in Abmischung mit anderen organischen Polyhydroxylverbindungen als Bindemittelkomponente für Zweikomponenten-Polyurethanlacke, die Lackpolyisocyanate, sowie gegebenenfalls die in der Polyurethanlacktechnologie üblichen Hilfs- und Zusatzmittel enthalten bei der Herstellung von Lacküberzügen auf Kunststofformteilen.

Die besonders gute Eignung der erfindungsgemässen Polyesterpolyole für die erfindungsgemässe Verwendung ist auf die erfindungsgemässe Auswahl der den Polyesterpolyolen zugrundeliegenden Ausgangsmaterialien und deren Mengenverhältnis zurückzuführen. Die erfindungsgemässen Polyesterpolyole weisen Hydroxylzahlen innerhalb des Bereichs von 80 bis 250, vorzugsweise 120 bis 200, Säurezahlen von unter 12, vorzugsweise 1,0 bis 10 und ein mittleres, aus der Stöchiometrie der eingesetzten Ausgangsmaterialien berechenbares Molekulargewicht von 800 bis 4000, vorzugsweise 800 bis 2000 auf. Die erfindungsgemässen Polyesterpolyole sind hochviskose, farblose bis hellgelb gefärbte, klare Harze, die in Lacklösungsmitteln wie beispielsweise Kohlenwasserstoffen wie Toluol, Xylol oder höheren Alkylbenzolen, Estern wie Ethylacetat, Butylacetat, Methylglykolacetat, Ethylglykolacetat, Methoxypropylacetat, Ketonen wie Methylethylketon oder Methylisobutylketon oder deren Gemischen klar löslich sind.

Erfindungswesentlich ist ausserdem, dass die erfindungsgemässen Polyhydroxypolyesterpolyole aus den obengenannten ausgewählten Aufbaukomponenten a) und b) hergestellt worden sind. Besonders bevorzugte erfindungsgemässe Polyesterpolyole sind die entsprechenden Umsetzungsprodukte auf Basis von a) Hexandiol-1,6 und Trimethylolpropan und b) Isophthalsäure, Adipinsäure und gegebenenfalls Phthalsäure oder Phthalsäureanhydrid.

Die FR-A-2 230 701 (Beispiele 1 und 2) beschreibt zur Polyesterpolyole, die bezüglich der Ausgangsmaterialien zu ihrer Herstellung den erfindungsgemässen Polyesterpolyolen vergleichbar sind. Allerdings liegt in diesen Polyesterpolyolen der Vorveröffentlichung sowohl das Molverhältnis der Ausgangskomponenten a) und b) (zumindest im Falle des Beispiels 2) als auch die Zusammensetzung der Komponente b) ausserhalb der erfindungswesentlichen Grenzen. Diese Unterschiede haben zur Folge, dass die Polyesterpolyole dieser Vorveröffentlichung zwar für den in FR-A-2 230 701 genannten Einsatzzweck (Herstellung von NCO-Prepolymeren, die mit Aldiminen ausgehärtet werden) gut geeignet sein mögen, für die Herstellung von hochwertigen Zweikomponentenpolyurethanlacken (Vernetzung der Polyesterpolyole mit Polyisocyanaten) jedoch ungeeignet sind, da die Polyesterpolyole der Vorveröffentlichung in den üblichen Lacklösungsmitteln nicht zu stabilen Lösungen verarbeitet werden können bzw. beim Verarbeiten der gebrauchsfertigen Lacke vor der Vernetzungsreaktion mit dem Polyisocyanat teilweise auskristallisieren, was zu unzureichenden lacktechnischen Eigenschaften, insbesondere zu einem unzureichenden Glanz der Beschichtungen führt.

Die Herstellung der erfindungsgemässen Polyester erfolgt in an sich bekannter Weise nach Methoden wie sie beispielsweise in «Ullmanns Enzyklopädie der technischen Chemie, Verlag Chemie Weinheim, 4. Auflage (1980), Band 19, Seiten 61 ff. oder von H. Wagner und H.F. Sarx in «Lackkunstharze», Carl Hanser Verlag, München (1971), Seiten 86–152 ausführlich beschrieben sind. Die Veresterung erfolgt gegebenenfalls in Gegenwart einer katalytischen Menge eines üblichen Veresterungskatalysators wie z.B. Säuren, Basen oder Übergangsmetallverbindungen wie z.B. Titantetrabutylat bei ca. 80–260 °C, vorzugsweise 100–200 °C. Die Veresterungsreaktion wird so lange durchgeführt, bis die angestrebten Werte für die Hydroxyl- und Säurezahl erreicht sind. Das Molekulargewicht der erfindungsgemässen Polyesterpolyole kann aus der Stöchiometrie der Ausgangsmaterialien (unter Berücksichtigung der resultierenden Hydroxyl- und Säurezahlen) berechnet werden.

Bei der erfindungsgemässen Verwendung der erfindungsgemässen Polyesterpolyole werden diese gegebenenfalls in Abmischung mit anderen, aus der Polyurethanlacktechnologie bekannten organischen Polyhydroxylverbindungen als Polyhydroxyl-Komponente eingesetzt. Bei diesen anderen Polyhydroxylverbindungen kann es sich um die üblichen Polyester-, Polyether- oder Polyacrylat-Polyole handeln. Vorzugsweise werden als weitere organische Polyhydroxylverbindungen, falls solche überhaupt neben den erfindungswesentlichen Polyesterpolyolen zum Einsatz gelangen, die an sich bekannten Polyacrylatpolyole des Standes der Technik eingesetzt.

Als Abmischkomponente geeignete Polyacrylatpolyole sind in Lacklösungsmitteln der bereits beispielhaft genannten Art lösliche Copolymerisate von 2-Hydroxyethyl- und/oder 2- bzw. 3-Hydroxypropyl(meth)acrylat mit anderen olefinisch ungesättigten Monomeren wie z.B. Methylacrylat, Methylmethacrylat, Styrol, Acrylsäure, Acrylnitril, Methacrylnitril u.dgl. Der Hydroxylgruppengehalt dieser Polyacrylatpolyole liegt im allgemeinen zwischen 1 und 5 Gew.-%. Bei der erfindungsgemässen Verwendung der erfindungsgemässen Polyesterpolyole können diese in Abmischung mit bis zu 90, vorzugsweise bis zu 50 Hydroxyläquivalent-%, bezogen auf alle Polyhydroxylverbindungen, an anderen Polyolen der beispielhaft genannten Art zum Einsatz gelangen. Besonders bevorzugt werden jedoch die erfindungsgemässen Polyesterpolyole als alleinige Polyol-Komponente bei der erfindungsgemässen Verwendung eingesetzt.

Reaktionspartner für die Polyol-Komponente bei der erfindungsgemässen Verwendung der erfindungsgemässen Polyesterpolyole sind die üblichen «Lackpolyisocyanate», d.h. vor allem die bekannten, Urethangruppen oder insbesondere Biuretgruppen bzw. Isocyanuratgruppen aufweisenden Modifizierungsprodukte von einfachen Diisocyanaten wie z.B. 1,6-Diisocyanatohexan, 1-Isocyanato- 3,3,5-trimethyl- 5-isocyanatomethyl-cyclohexan (Isophorondiisocyanat), 2,4-Diisocyanatotoluol und seine Gemische mit bis zu 35 Gew.-%, bezogen auf Gesamtgemisch, an 2,6-Diisocyanatotoluol oder deren Gemische. Besonders bevorzugt werden die entsprechenden «Lackpolyisocyanate» mit aliphatisch und/oder cycloaliphatisch gebundenen Isocyanatgruppen eingesetzt.

Zu den Urethangruppen aufweisenden «Lackpolyisocyanaten» gehören insbesondere die Umsetzungsprodukte von 2,4- und gegebenenfalls 2,6-Diisocyanatotoluol mit unterschüssigen Mengen an Trimethylolpropan bzw. dessen Gemischen mit einfachen Diolen wie z.B. den isomeren Propan- oder Butandiolen. Die Herstellung derartiger, Urethangruppen aufweisender Lackpolyisocyanate in praktisch monomerenfreier Form ist beispielsweise in DE-C-1 090 196 beschrieben.

Zu den Biuretgruppen aufweisenden Lackpolyisocyanaten, die bei der erfindungsgemässen Verwendung ganz besonders bevorzugt sind, gehören insbesondere jene auf Basis von 1,6-Diisocyanatohexan, deren Herstellung beispielsweise in EP-B1 000 3505, DE-C-1 101-394, US-A-3 358 010 oder US-A-3 903 127 beschrieben ist.

Zu den ebenfalls bevorzugten, Isocyanuratgruppen aufweisenden Polyisocyanaten gehören insbesondere die Isocyanatgruppen aufweisenden Trimerisate bzw. Mischtrimerisate der oben beispielhaft genannten Diisocyanate, wie z.B. die Isocyanuratgruppen aufweisenden Polyisocyanate auf Basis von Diisocyanatotoluol gemäss GB-A-1 060 430, GB-A-1 506 373 oder GB-A-1 458 564, die Mischtrimerisate von Diisocyanatotoluolen mit 1,6-Diisocyanatohexan, die beispielsweise gemäss DE-C-1 644 809 oder DE-A-3 144 672 zugänglich sind, und insbesondere die aliphatischen bzw. aliphatischcycloaliphatischen Trimerisate bzw. Mischtrimerisate auf Basis von 1,6-Diisocyanatohexan und/oder Isophorondiisocyanat, die beispielsweise gemäss US-A-4 324 879, US-A-4 288 586, DE-A-3 100 262, DE-A-3 100 263, DE-A-3 033 860 oder DE-A-3 144 672 zugänglich sind. Die bei der erfindungsgemässen Verwendung zum Einsatz gelangenden Lackpolyisocyanate weisen im allgemeinen einen Isocyanatgehalt von 5 bis 25 Gew.-% und einen Restgehalt an, zu ihrer Herstellung eingesetzten, monomeren Diisocyanaten von unter vorzugsweise unter 2 Gew.-% auf. Selbstverständlich können auch beliebige Gemische der beispielhaft genannten Lackpolyisocyanate zum Einsatz gelangen.

In den bei der erfindungsgemässen Verwendung zum Einsatz gelangenden Zweikomponenten-Polyurethanlacken liegen die Polyolkomponente und die Polyisocyanatkomponente in, einem Äquivalentverhältnis von Isocyanatgruppen zu Hydroxylgruppen von 10:1 bis 1:2, vorzugsweise 1,5:1 bis 1:1,2 entsprechenden Mengen vor. Die durch Vermischen der beiden Komponenten erhaltenen Zweikomponenten-Bindemittel haben nur eine begrenzte Verarbeitungszeit von ca. 2 bis 48 Stunden und werden entweder als solche (lösungsmittelfreie Klarlacke), vorzugsweise jedoch unter Mitverwendung der üblichen Hilfs- und Zusatzmittel verarbeitet. Diese gegebenenfalls mitzuverwendenden Hilfs- und Zusatzmittel können entweder dem Gemisch oder den Einzelkomponenten vor deren Durchmischung hinzugefügt werden.

Als Hilfs- und Zusatzmittel kommen beispielsweise Lösungsmittel in Betracht, wie z.B. Ethylacetat, Butylacetat, Methylethylketon, Methylisobutylketon, Ethylenglykolmonoethylether-acetat, Methoxypropylacetat, Toluol, Xylol, Testbenzin oder beliebige Gemische dieser Lösungsmittel.

Die Lösungsmittel werden in einer Menge von bis zu 70, vorzugsweise bis zu 40 Gew.-%, bezogen auf Gesamtgemisch, mitverwendet.

Weitere, gegebenenfalls mitzuverwendende Hilfs- und Zusatzmittel sind z.B. Weichmacher wie z.B. Trikresylphosphat oder Phthalsäurediester, Chlorparaffine, Pigmente und Füllstoffe, wie Titanoxid, Bariumsulfat, Kreide, Russ; Katalysatoren wie z.B. N,N-Dimethylbenzylamin, N-Methylmorpholin, Bleioctoat oder Dibutylzinndilaurat; Verlaufmittel; Verdickungsmittel, gegebenenfalls Stabilisatoren, wie substituierte Phenole, organofunktionelle Silane als Haftvermittler und Lichtschutzmittel. Derartige Lichtschutzmittel sind beispielsweise sterisch gehinderte Amine, wie sie u.a. in DE-OS 2 417 353 (= US-PS 4 123 418 und US-PS 4 110 304) und DE-OS 2 456 864 (= US-PS 3 993 655 und US-PS 4 221 701) beschrieben sind. Besonders bevorzugte Verbindungen sind: Bis-(1,2,2,6,6-pentamethylpiperidyl-4)-sebacat, Bis-(2,2,6,6-tetramethylpiperidyl-4)-sebacat, n-Butyl-(3,5-di-tert.-butyl-4-hydroxybenzyl)-malonsäure-bis-(1,2,2,6,6-pentamethylpiperidyl-4)-ester.

Die den Füllstoffen und Pigmenten anhaftende Feuchtigkeit kann durch vorhergehende Trocknung oder durch Mitverwendung von wasseraufnehmenden Stoffen, wie z.B. Molekularsieb-Zeolithen, entfernt werden.

Die Trocknung der bei der erfindungsgemässen Verwendung resultierenden Lackfilme kann bei Raumtemperatur erfolgen und bedarf keiner Temperaturerhöhung, um die eingangs erwähnten, optimalen Eigenschaften zu erreichen. Wegen der verhältnismässig langsam verlaufenden Trocknung bei Raumtemperatur ist jedoch oftmals eine Temperaturerhöhung auf ca. 60 bis 120 °C, vorzugsweise 80 bis 100 °C während eines Zeitraums von 20 bis 40 Minuten empfehlenswert. Eine höhere Trocknungstemperatur und somit eine Verkürzung des Einbrennprozesses ist zwar möglich, jedoch besteht die Gefahr, dass sich die mit den Lacken beschichteten Kunststoffteile verformen.

Die erfindungsgemäss zum Einsatz gelangenden Lacke eignen sich vor allem für die Lackierung von Kunststoffen, jedoch auch für Metalle und andere Substrate. Besonders vorteilhaft eignen sich die erfindungsgemäss zum Einsatz gelangenden Lacke zum Lackieren von flexiblen Kunststoffteilen, wie sie beim Automobilbau Anwendung finden. Wegen der gleichermassen guten Eignung der erfindungsgemäss zum Einsatz gelangenden Lacke für Kunststoffe und Metalle eignen sich diese insbesondere auch hervorragend zur Lackierung von Konstruktionen wie z.B. Aussenteile von Automobilen, die in moderner Gemischtbauweise aus Kunststoff- und Metallteilen hergestellt werden. Die besonderen Vorteile der erfindungsgemäss zum Einsatz gelangenden Lacke begünstigen diese «on line»-Lackierung insbesondere von Automobilaussenteilen, da die Härtung der Lackfilme bereits bei niedrigen Temperaturen erfolgen kann, so dass die Kunststoffe keiner übermässigen Temperaturbelastung ausgesetzt werden, und da die resultierenden Lackfilme eine ausgezeichnete Witterungsbeständigkeit und Elastizität aufweisen, so dass dekorative Lackierungen für eine lange Zeitdauer unverändert erhalten bleiben und Beanspruchungen durch Stoss oder Schlag schadlos überstehen. Hervorzuheben ist in diesem Zusammenhang insbesondere auch die ausgezeichnete Steinschlagfestigkeit von erfindungsgemäss hergestellten Automobil-Decklackierungen. Die mit den erfindungsgemäss zum Einsatz gelangenden Zweikomponenten-Lacken erhaltenen Lackfilme erfüllen in optimaler Weise zwei an sich gegensätzliche Forderungen, nämlich eine ausgezeichnete Tieftemperatur-Elastizität bei gleichzeitig hoher Glanzhaltung.

Die erfindungsgemäss zum Einsatz gelangenden Lacke können selbstverständlich nach allen üblichen Methoden der Lacktechnologie wie z.B. Streichen, Spritzen oder Tauchen auf die zu beschichtenden Substrate aufgetragen werden. Die erfindungsgemässen Lacke eignen sich sowohl zur Herstellung von Grundierungen als auch zur Herstellung von Zwischenschichten als auch zur Herstellung von Deckschichten auf den zu lackierenden Substraten.

Die nachfolgenden Beispiele dienen zur weiteren Erläuterung der Erfindung.

Beispiele
Allgemeine Herstellungsvorschrift für die Polyesterpolyole:

Die Komponenten werden in einem Reaktor, der mit Rührer, Heizung, automatischer Temperatursteuerung, Kolonne und Vorlage ausgerüstet ist, eingewogen und auf 100 bis 150 °C erhitzt, wobei eine inhomogene aber gut rührbare Schmelze entsteht. Nach 1 bis 2 h erhöht man unter Abdestillieren von Wasser die Temperatur im Verlauf von 4 bis 8 h allmählich auf 200 °C. Die Schmelze wird hierbei homogen und klar. Danach fügt man eine katalytische Menge eines üblichen Umesterungskatalysators (Titantetrabutylat) zu und setzt die Veresterung unter vermindertem Druck bei 200 °C fort. Im Verlauf von 6 bis 8 h senkt man den Druck auf 10 bis 20 mbar und rührt unter diesen Bedingungen weiter, bis die gewünschte Säurezahl erreicht ist.

Man erhält farblose, bis schwach gelb gefärbte Weichharze, die in üblichen Lacklösemitteln klar löslich sind.

Die Zusammensetzung und die Daten der einzelnen, auf diesem Wege hergestellten Polyester sind in den Beispielen 1 bis 12 angegeben.

Beispiel 1 (erfindungsgemäss)
Polyester aus

| 4,75 Mol Hexandiol-1,6 | 560,0 g |
| 2,0 Mol Glycerin | 184 g |
| 2,9 Mol Isophthalsäure | 481,4 g |
| 1,7 Mol Azelainsäure | 320 g |
| 1,15 Mol Terephthalsäure | 191 g |

Hydroxylzahl: 149
Säurezahl: 8
Mittlere Funktionalität: ca. 4
Mittleres Molgewicht: ca. 1530

Der Polyester besteht aus 54 Mol-% Polyolen und 46 Mol-% Dicarbonsäuren. Die Polyolkomponente besteht zu 70,4 Mol-% aus Hexandiol-1,6, die Säurekomponente zu 50,4 Mol-% aus Isophthalsäure.

Beispiel 2 (erfindungsgemäss)
Polyester aus

| 3,7 Mol Hexandiol-1,6 | 436,6 g |
| 0,5 Mol Glycerin | 46 g |
| 0,46 Mol Trimethylolpropan | 61,6 g |
| 2,36 Mol Isophthalsäure | 391,8 g |
| 0,75 Mol Bernsteinsäure | 88,5 g |
| 0,55 Mol Hexahydrophthalsäureanhydrid | 84,7 g |

Hydroxylzahl: 164
Säurezahl: 3
Mittlere Funktionalität: ca. 2,9
Mittleres Molgewicht: ca. 980

Der Polyester besteht aus 56 Mol-% Polyolen und 44 Mol-% Dicarbonsäuren. Die Polyolkomponente besteht zu 79,4 Mol-% aus Hexandiol-1,6, die Säurekomponente zu 64,5 Mol-% aus Isophthalsäure.

Beispiel 3 (erfindungsgemäss)
Polyester aus

| 3,225 Mol Hexandiol-1,6 | 380,6 g |
| 0,4 Mol Pentaerythrit | 54,4 g |
| 2,1 Mol Isophthalsäure | 348,6 g |
| 0,525 Mol Sebazinsäure | 106,2 g |

Hydroxylzahl: 187
Säurezahl: 5
Mittlere Funktionalität: ca. 2,8
Mittleres Molgewicht: ca. 800

Der Polyester besteht aus 58 Mol-% Polyolen und 42 Mol-% Dicarbonsäuren. Die Polyolkomponente besteht zu 89% aus Hexandiol-1,6, die Säurekomponente zu 80% aus Isophthalsäure.

Beispiel 4 (erfindungsgemäss)
Polyester aus

| 4,4 Mol Hexandiol-1,6 | 519,2 g |
| 1,1 Mol Trimethylolpropan | 147,4 g |
| 2,7 Mol Isophthalsäure | 448,2 g |
| 1,1 Mol Adipinsäure | 160,6 g |
| 0,7 Mol Tetrahydrophthalsäureanhydrid | 106,4 g |

Hydroxylzahl: 138
Säurezahl: 4
Mittlere Funktionalität: ca. 3,1
Mittleres Molgewicht: ca. 1230

Der Polyester besteht aus 55 Mol-% Polyolen und 45 Mol-% Dicarbonsäuren. Die Polyolkomponente besteht zu 80 Mol-% aus Hexandiol-1,6, die Säurekomponente zu 60 Mol-% aus Isophthalsäure.

Beispiel 5 (erfindungsgemäss)
Polyester aus

| 4 Mol Hexandiol-1,6 | 472 g |
| 1 Mol Trimethylolpropan | 134 g |
| 2,5 Mol Isophthalsäure | 415 g |
| 0,5 Mol Phthalsäureanhydrid | 74 g |
| 1 Mol Adipinsäure | 146 g |

Hydroxylzahl: 143
Säurezahl: 3
Mittlere Funktionalität: ca. 3
Mittleres Molgewicht: 1100

Der Polyester besteht aus 55,6 Mol-% Polyolen und 44,4 Mol-% Dicarbonsäuren. Die Polyolkomponente besteht zu 80 Mol-% aus Hexandiol-1,6, die Carbonsäurekomponente zu 62,5 Mol-% aus Isophthalsäure.

Beispiel 6 (erfindungsgemäss)
Polyester aus

| 4 Mol Hexandiol-1,6 | 472 g |
| 1 Mol Trimethylolpropan | 134 g |
| 3 Mol Isophthalsäure | 498 g |
| 1 Mol Adipinsäure | 146 g |

Hydroxylzahl: 148
Säurezahl: 1,8
Mittlere Funktionalität: 3
Mittleres Molgewicht: 1170

Der Polyester besteht aus 55,6 Mol-% Polyolen und 44,4 Mol-% Dicarbonsäuren. Die Polyolkomponente besteht zu 80 Mol-% aus Hexandiol-1,6, die Carbonsäurekomponente zu 75 Mol-% aus Isophthalsäure.

Beispiel 7 (erfindungsgemäss)
Polyester aus

| 4,5 Mol Hexandiol-1,6 | 531 g |
| 1,5 Mol Trimethylolpropan | 201 g |
| 3,5 Mol Isophthalsäure | 581 g |
| 1 Mol Glutarsäure | 132 g |
| 0,5 Mol Phthalsäureanhydrid | 74 g |

Hydroxylzahl: 142
Säurezahl: 2,6
Mittlere Funktionalität: ca. 3,5
Mittleres Molgewicht: ca. 1350

Der Polyester besteht aus 54,5 Mol-% Polyolen und 45,5 Mol-% Dicarbonsäuren. Die Polyolkomponente besteht zu 75 Mol-% aus Hexandiol-1,6, die Carbonsäurekomponente zu 70 Mol-% aus Isophthalsäure.

Beispiel 8 (Vergleich)
Polyester aus
1    Mol Phthalsäureanhydrid
2    Mol Hexahydrophthalsäureanhydrid
3,45 Mol Trimethylolpropan

Hydroxylzahl: 260
Säurezahl: 4
Mittlere Funktionalität: 9–10
Mittleres Molgewicht: 1900

Beispiel 9 (Vergleich)
Polyester aus
5,4   Mol Propylenglykol-1,2
1,9   Mol Trimethylolpropan
0,62 Mol Phthalsäureanhydrid
5,7   Mol Adipinsäure

Hydroxylzahl: 165
Säurezahl: 6

Beispiel 10 (Vergleich)
Polyester aus
5 Mol Isophthalsäure
6 Mol Hexandiol-1,6

Hydroxylzahl: 80
Säurezahl: 2
Mittlere Funktionalität: 2
Mittleres Molgewicht: 1360

Dieser Polyester besteht aus 54,5 Mol-% Polyolen und 45,5 Mol-% Dicarbonsäuren.

Beispiel 11 (Vergleich)
Polyester aus
3 Mol Isophthalsäure
2 Mol Adipinsäure
6 Mol Hexandiol-1,6

Hydroxylzahl: 85
Säurezahl: 1
Mittlere Funktionalität: 2
Mittleres Molgewicht: 1320

Dieser Polyester besteht aus 54,5 Mol-% Polyolen und 45,5 Mol-% Dicarbonsäuren.

Beispiel 12 (Vergleich)
Polyester aus
4 Mol Hexandiol-1,6
1 Mol Trimethylolpropan
4 Mol Isophthalsäure

Hydroxylzahl: 145
Säurezahl: 3
Mittlere Funktionalität: 3
Mittleres Molgewicht: 1200

Dieser Polyester besteht aus 55,6 Mol-% Polyolen und 44,4 Mol-% Dicarbonsäure, enthält jedoch keine aliphatische Dicarbonsäure.

In dem nachfolgenden Verwendungsbeispiel 13 werden die folgenden Lackpolyisocyanate eingesetzt:

Lackpolyisocyanat A:
Biuretpolyisocyanat auf Basis von 1,6-Diisocyanatohexan, bestehend aus einem Gemisch von N,N',N''-Tris-(isocyanatohexyl)-biuret mit seinen höheren Homologen, 75 gew.-%ige Lösung in Ethylglykolacetat/Xylol (Volumenverhältnis = 1:1), NCO-Gehalt der Lösung: 16,8 Gew.-%. Gehalt der Lösung an freiem 1,6-Diisocyanatohexan: unter 0,7 Gew.-%.

Lackpolyisocyanat B:
Isocyanuratgruppen aufweisendes Polyisocyanat auf Basis von 1,6-Diisocyanatohexan, bestehend aus einem Gemisch aus N,N',N''-Tris-(isocyanatohexyl)-isocyanurat mit seinen höheren Homologen, 90 gew.-%ige Lösung in Butylacetat. NCO-Gehalt der Lösung: 21,7 Gew.-%. Gehalt der Lösung an freiem 1,6-Diisocyanatohexan: unter 0,5 Gew.-%.

Beispiel 13 (Verwendung)
Dieses Beispiel beschreibt die Herstellung von gebrauchsfertigen Lacken auf Basis der Polyesterpolyole gemäss Beispielen 1 bis 12, deren Applikation und die Prüfung der resultierenden Lackfilme. Um die Beurteilung der einzelnen Lackmuster zu vereinfachen, wurden nur Weisslacke hergestellt. Dabei wurden die Polyole aus den Beispielen 1 bis 12 mit verschiedenen Zusätzen versehen und auf einen Dreiwalzenmischer mit dem Pigment angerieben.

Die folgende Tabelle 1 gibt die Zusammensetzung der Polyol-Anreibungen wieder:

Tabelle 1

| Bestandteil | Gew.-% |
|---|---|
| Polyester aus den Beispielen 1 bis 12 | 21,1 |
| Lösergemisch aus Ethylacetat, Ethylglykolacetat und Methylethylketon 1:1:1 | 24,9 |
| Silikonöl als Verlaufsmittel (®Baysilonöl OL der Bayer AG, Leverkusen, 10%ig in Ethylglykolacetat) | 0,4 |
| Zinkoctoat (10%ig in Ethylglykolacetat) | 0,6 |
| Titandioxid (vom Rutiltyp) | 19,8 |
| Mittel zur Verhinderung des Absetzens (®Bentone der Firma Kronos-Titan, Leverkusen) | 0,3 |

Diese Pigmentpasten werden nun mit den Polyisocyanaten A bzw. B versetzt, wobei ein NCO/OH-Verhältnis von ca. 1,2:1 eingehalten wird. Ausserdem wird noch weiteres Lösungsmittel zugegeben, so dass die gebrauchsfertigen Lacke aus ca. 33 Gew.-% Bindemittel
ca. 20 Gew.-% Pigment und
ca. 47 Gew.-% Lösungsmittel
bestehen.

Die Auslaufzeit (DIN 53 211, 4 mm Düse) beträgt ca. 18 Sekunden. Damit sind die Lacke spritzfertig eingestellt. Die Verarbeitungszeit bei Aufbewahrung im geschlossenen Gebinde beträgt ca. 30 Stunden.

Die Proben der spritzfertig eingestellten Lacke werden einerseits auf Flussstahlplatten von 0,5 mm Dicke und andererseits auf 3,5 mm dicke Kunstoffplatten aus halbhartem Polyurethanintegralschaumstoff (Bayflex ®-Typ der BAYER AG) aufgespritzt und während 20 Minuten bei 80 °C ausgehärtet. Die resultierenden, trockenen Lackschichten weisen eine Dicke von ca. 50 µm auf.

Die einzelnen Lacke tragen die folgenden Bezeichnungen:

L 1  Polyester aus Beispiel  1 + Polyisocyanat A
L 2  Polyester aus Beispiel  2 + Polyisocyanat A
L 3  Polyester aus Beispiel  3 + Polyisocyanat A
L 4  Polyester aus Beispiel  4 + Polyisocyanat A
L 5a Polyester aus Beispiel  5 + Polyisocyanat A
L 5b Polyester aus Beispiel  5 + Polyisocyanat B
L 6a Polyester aus Beispiel  6 + Polyisocyanat A
L 6b Polyester aus Beispiel  6 + Polyisocyanat B
L 7  Polyester aus Beispiel  7 + Polyisocyanat A
L 8  Polyester aus Beispiel  8 + Polyisocyanat A
L 9  Polyester aus Beispiel  9 + Polyisocyanat A
L 10 Polyester aus Beispiel 10 + Polyisocyanat A
L 11 Polyester aus Beispiel 11 + Polyisocyanat A
L 12 Polyester aus Beispiel 12 + Polyisocyanat A

Vor der Prüfung der lacktechnischen Eigenschaften der auf die Stahlplatten aufgetragenen Lackschichten werden die beschichteten Platten zunächst während 8 Tagen bei Raumtemperatur gelagert. Anschliessend wird jeweils die Schlagfestigkeit (ASTM-D 2794), Härte nach König (DIN 53 157), Glanz nach Gardner bei 60° (DIN 67 530) und die Haftfestigkeit im Kreuzschnitt (DIN 53 151) geprüft. Fast alle Prüflinge zeigen bei diesen Prüfungen ausgezeichnete Ergebnisse. Auch Verlauf und Aussehen der Lackmuster sind ausgezeichnet und lassen eine Differenzierung nicht zu. Auch die Prüfung in einem Weatherometer zeigt die hohe Qualität der Lackmuster. Eine Ausnahme machen hierbei lediglich die Lackproben L 10 und L 11, die schon nach kurzer Zeit Glanz und Haftung verlieren. Diese Proben weisen auch eine unzureichende Härte und Lösungsmittelbeständigkeit auf. Da auch die entsprechenden Lacke nicht lagerbeständig sind und besonders in der Kälte auskristallisieren, werden sie nicht in die weiteren Prüfungen einbezogen.

Weitere entsprechend mit den Lacken L 1 bis L 9 und L 12 beschichtete Flussstahlplatten werden in Florida einem Bewitterungstest unterzogen. Hierbei werden die beschichteten Prüflinge in einem Winkel von 45° ausgelegt. Beurteilt wird die Veränderung des Glanzes in Abhängigkeit von der Zeit. Die Beurteilung des Glanzes erfolgt ohne Reinigung der Bleche nach Gardner bei 60° im zeitlichen Abstand von 3 Monaten über einen Zeitraum von insgesamt 24 Monaten. Die entsprechenden Ergebnisse sind in der Tabelle 2 zusammengefasst.

Tabelle 2
Glanzgrad nach

| Lackprobe | 0 | 3 | 6 | 9 | 12 | 15 | 18 | 21 | 24 Monaten |
|---|---|---|---|---|---|---|---|---|---|
| L 1 | 95 | 90 | 86 | 80 | 75 | 70 | 68 | 62 | 50 |
| L 2 | 95 | 90 | 90 | 87 | 82 | 78 | 70 | 66 | 60 |
| L 3 | 96 | 88 | 80 | 77 | 70 | 65 | 60 | 56 | 45 |
| L 4 | 95 | 88 | 85 | 85 | 80 | 75 | 70 | 65 | 60 |
| L 5a | 96 | 90 | 85 | 85 | 80 | 80 | 80 | 60 | 60 |
| L 5b | 95 | 90 | 90 | 88 | 85 | 80 | 72 | 70 | 65 |
| L 6a | 96 | 90 | 90 | 85 | 80 | 75 | 70 | 70 | 60 |
| L 6b | 95 | 90 | 90 | 80 | 80 | 75 | 70 | 60 | 55 |
| L 7 | 96 | 90 | 85 | 80 | 73 | 70 | 60 | 55 | 50 |
| L 8 | 96 | 90 | 90 | 85 | 80 | 60 | 48 | 32 | 20 |
| L 9 | 96 | 30 | 15 | 10 | 10 | 5 | 5 | – | – |
| L 12 | 96 | 90 | 85 | 60 | 45 | 40 | 25 | 20 | 10 |

Diskussion der Ergebnisse der Freibewitterung in Florida:

Die Tabelle 2 zeigt die erstaunliche Glanzhaltung der erfindungsgemässen Polyurethanlacke nach 2-jähriger Bewitterung. Nur der Vergleichslack L 8 ist im ersten Teil der Prüfzeit vergleichbar gut. Allerdings weist dieser Lack eine völlig unzureichende Elastizität auf (vgl. Tabelle 3).

Die bewitterten, mit erfindungsgemässen Lacken beschichteten Bleche werden nach Abprüfung der Glanzhaltung gewaschen und die Lacke in Bezug auf Haftung und Elastizität untersucht. Die Lacke zeigen dabei durchweg eine praktisch unveränderte gute Haftung und elastische Verformbarkeit.

Zur Prüfung der Elastizität der Lackschichten werden zunächst Proben einer Länge von 70 mm und einer Breite von 8 mm aus den beschichteten Kunststoffteilen ausgesägt.

Die Prüfung der Elastizität wird mit einer Zugmaschine bei verschiedenen Temperaturen durchgeführt. Die Kunststoffproben werden so in die Klemmen dieser Maschine eingespannt, dass die freie Einspannlänge gleich Ausgangslänge gleich 40 mm beträgt. Um Fehler zu eliminieren, die während der Dehnungsmessung durch das Fliessen der Proben aus den Klemmen auftreten könnten, werden die Proben im Abstand von 40 mm markiert. Die Zuggeschwindigkeit der Maschine beträgt 50 mm/min.

Bei sichtbarer Schädigung des Lackes (z.B. Rissbildung oder auch punktförmige Schädigung) wird die Zugprüfmaschine sofort abgeschaltet und der Abstand der Markierungen gemessen. Aus der resultierenden Längenänderung wird die Dehnung bis zur Schädigung (in %) berechnet (Tabelle 3). Bei jeder Temperatur wurden 5 Messungen durchgeführt und der Mittelwert angegeben.

Tabelle 3

| Lackmuster bei | Dehnung in % der Ausgangslänge (40 mm) | | | | |
|---|---|---|---|---|---|
| | −30 °C | −20 °C | 0 °C | +20 °C | +40 °C |
| L 1 | 31 | 53 | 80 | 92 | 80 |
| L 2 | 35 | 60 | 82 | 102 | 80 |
| L 3 | 25 | 47 | 62 | 87 | 75 |
| L 4 | 47 | 72 | 97 | 120 | 102 |
| L 5a | 55 | 97 | 138 | 158 | 132 |
| L 5b | 66 | 102 | 129 | 158 | 126 |
| L 6a | 47 | 94 | 129 | 160 | 123 |
| L 6b | 58 | 97 | 127 | 167 | 117 |
| L 7 | 62 | 97 | 137 | 170 | 128 |
| L 8 | – | – | 5 | 33 | 40 |
| L 9 | 20 | 18 | 23 | 55 | 50 |
| L 12 | 3 | 15 | 37 | 51 | 45 |

Diskussion der Ergebnisse der Dehnungsmessung bei verschiedenen Temperaturen:

Die Ergebnisse zeigen die besonderen Vorteile der mit den erfindungsgemässen Lacken hergestellten Lackschichten, die insbesondere ein hohes Maximum an Elastizität in dem besonders wichtigen Temperaturbereich von 0 bis 20 °C aufweisen. Die Elastizität der erfindungsgemäss hergestellten Lackschichten ist um ein vielfaches höher als die aus den nicht erfindungsgemässen Lacken L 8 und L9 hergestellten.

Die aus den Lacken L 1 und L 3 hergestellten Lackschichten weisen zwar eine etwas geringere Elastizität als die aus den übrigen erfindungsgemässen Lacken hergestellten Schichten auf, jedoch sind sie der nicht erfindungsgemäss hergestellten Lackschicht L 12 noch eindeutig überlegen.

**Patentansprüche**

1. Polyesterpolyole des Hydroxylzahlbereichs von 80 bis 250, die Umsetzungsprodukte von
a) 54 bis 58 Mol-% einer Polyol-Komponente mit
b) 46 bis 42 Mol-% einer Dicarbonsäure-Komponente
darstellen, dadurch gekennzeichnet, dass
a) die Polyolkomponente aus (i) 70 bis 90 Mol-% Hexandiol-1,6 und (ii) 10 bis 30 Mol-% mindestens eines höherwertigen Alkohols, ausgewählt aus der Gruppe bestehend aus Trime-thylolpropan, Glycerin, Pentaerythrit und Gemi-schen dieser Polyole, besteht, und
b) die Dicarbonsäurekomponente aus (iii) 50 bis 80 Mol-% Isophthalsäure, (iv) 30 bis 20 Mol-% mindestens einer Dicarbonsäure der For-mel HOOC–$(CH_2)_n$–COOH (n = eine ganze Zahl von 2–8) und (v) 0 bis 20 Mol-% mindestens einer Dicarbonsäure oder mindestens eines Dicarbonsäureanhydrids, ausgewählt aus der Gruppe bestehend aus Terephthalsäure, Phthalsäure, Phthalsäureanhydrid, Tetrahydrophthalsäure, Tetrahydrophthalsäureanhydrid, Hexahydro-phthalsäure und Hexahydrophthalsäureanhy-drid, besteht, wobei sich die unter a) und b) gemachten Prozentangaben jeweils zu 100 ergänzen.

2. Polyesterpolyole gemäss Anspruch 1, dadurch gekennzeichnet, dass
a) die Polyol-Komponente sich aus einem Gemisch aus Hexandiol-1,6 mit Trimethylolpropan und
b) die Dicarbonsäure-Komponente sich aus einem Gemisch aus Isophthalsäure, Adipinsäure und gegebenenfalls Phthalsäure und Phthalsäureanhydrid zusammensetzt.

3. Verwendung der Polyesterpolyole gemäss Ansprüchen 1 und 2, gegebenenfalls in Abmi-schung mit anderen organischen Polyhydroxyl-verbindungen als Bindemittelkomponente für Zweikomponenten-Polyurethanlacken, die Lackpolyisocyanate, sowie gegebenenfalls die in der Polyurethanlacktechnologie üblichen Hilfs- und Zusatzmittel enthalten bei der Herstellung von Lacküberzügen auf Kunststofformteilen.

4. Verwendung gemäss Anspruch 3, dadurch gekennzeichnet, dass es sich bei den mit Lacküberzügen zu versehenden Kunststofformteilen um flexible Kunststofformteile, wie sie im Automobilbau Verwendung finden, handelt.

5. Verwendung gemäss Anspruch 3 und 4, dadurch gekennzeichnet, dass es sich bei den mit Lacküberzügen zu versehenden Substraten um in Gemischtbauweise hergestellte Konstruktionen aus Metallen und flexiblen Kunststoffen, wie sie im Automobilbau Verwendung finden, handelt.

## Revendications

1. Polyesterpolyols d'un indice d'hydroxyle dans l'intervalle de 80 à 250, qui sont des produits de réaction de

a) 54 à 58 mol-% d'un composant polyol avec

b) 46 à 42 mol-% d'un composant acide dicarboxylique caractérisés en ce que

a) le composant polyol consiste en (i) 70 à 90 mol-% d'hexanediol-1,6 et (ii) 10 à 30 mol-% d'au moins un polyalcool choisi parmi le triméthylolpropane, le glycérol, le pentaérythritol et les mélanges de ces polyols et

b) le composant acide dicarboxylique consiste en (iii) 50 à 80 mol-% d'acide isophtalique, (iv) 30 à 20 mol-% d'au moins un acide dicarboxylique de formule $HOOC-(CH_2)_n-COOH$ (n = nombre entier de 2–8) et (v) 0 à 20 mol-% d'au moins un acide dicarboxylique ou d'au moins un anhydride d'acide dicarboxylique choisi parmi l'acide téréphtalique, l'acide phtalique, l'anhydride phtalique, l'acide tétrahydrophtalique, l'anhydride tétrahydrophtalique, l'acide hexahydrophtalique et l'anhydride hexahydrophtalique,

les pourcentages indiqués sous a) et b) faisant chaque fois un total de 100.

2. Polyesterpolyols selon la revendication 1, caractérisés en ce que

a) le composant polyol se compose d'un mélange d'hexanediol-1,6 et de triméthylolpropane et

b) le composant acide dicarboxylique se compose d'un mélange d'acide isophtalique, d'acide adipique et éventuellement d'acide phtalique et d'anhydride phtalique.

3. Utilisation des polyesterpolyols selon les revendications 1 et 2, éventuellement en mélange avec d'autres composés polyhydroxylés organiques, comme composant liant pour les laques de polyuréthannes à deux composants, qui contiennent des polyisocyanates pour laques, ainsi éventuellement que les agents auxiliaires et additifs habituels dans la technologie des laques de polyuréthannes, dans la fabrication de revêtements de laques sur des pièces moulées de matières plastiques.

4. Utilisation selon la revendication 3, caractérisée en ce que les pièces moulées de matières plastiques à revêtir de laque sont des pièces moulées flexibles de matières plastiques telles qu'on les utilise dans la construction automobile.

5. Utilisation selon les revendications 3 et 4, caractérisée en ce que les supports à revêtir de laque sont des éléments de structure composite de métaux et matières plastiques flexibles, tels qu'on les utilise dans la construction automobile.

## Claims

1. Polyesterpolyols in the hydroxyl number range of from 80 to 250 consisting of reaction products of

a) from 54 to 58 mol-% of a polyol component and

b) from 46 to 42 mol-% of a dicarboxylic acid component,

characterized in that,

a) the polyol component consists of (i) from 70 to 90 mol-% of hexane-1,6-diol and (ii) from 10 to 30 mol-% of at least one higher valent alcohol selected from trimethylol propane, glycerol, pentaerythritol and mixtures of these polyols, and

b) the dicarboxylic acid component consists of (iii) from 50 to 80 mol-% of isophthalic acid, (iv) from 30 to 20 mol-% of at least one dicarboxylic acid corresponding to the Formula $HOOC-(CH_2)_n-COOH$ (n = an integer of from 2–8), and (v) from 0 to 20 mol-% of at least one dicarboxylic acid or at least one dicarboxylic acid anhydride selected from terephthalic acid, phthalic acid, phthalic acid anhydride, tetrahydrophthalic acid, tetrahydrophthalic acid anhydride, hexahydrophthalic acid and hexahydrophthalic acid anhydride, the percentage figures given under a) and b) in each case adding up to 100.

2. Polyester polyols according to Claim 1, characterized in that

a) the polyol component is composed of a mixture of hexane-1,6-diol and trimethylol propane and

b) the dicarboxylic acid component is composed of a mixture of isophthalic acid, adipic acid and optionally phthalic acid and phthalic acid anhydride.

3. Use of the polyester polyols according to Claims 1 and 2, optionally in admixture with other organic polyhydroxyl compounds, as binder component for two-component polyurethane lacquers which contain lacquer polyisocyanates and optionally the conventional auxiliary agents and additives used in the technology of polyurethane lacquers, for the preparation of lacquer coatings on moulded plastics parts.

4. Use according to Claim 3, characterized in that the plastics moulded parts to be covered with lacquer coatings are flexible plastics moulded parts of the type used in the construction of motor vehicles.

5. Use according to Claims 3 and 4, characterized in that the substrates to be covered with lacquer coatings are constructions of metals and flexible plastics produced by the composite construction method, of the type used in the construction of motor vehicles.